# EUROPEAN PATENT APPLICATION

(11) **EP 4 700 643 A1**
(43) Date of publication of application: **25.02.2026**
(21) Application number: 24869942.3
(22) Date of filing: 01.07.2024
(51) Int. Cl.: G06F 40/166

(54) **CONTENT EDITING METHOD, MEDIUM, AND ELECTRONIC DEVICE**

(30) Priority: 27.09.2023 CN 202311269706
(71) Applicant: Huawei Technologies Co., Ltd., Shenzhen, Guangdong 518129 (CN)
(72) Inventor: PENG, Guanqi, Shenzhen, Guangdong 518129 (CN); SHAO, Jicheng, Shenzhen, Guangdong 518129 (CN); DUAN, Xiaoxiao, Shenzhen, Guangdong 518129 (CN); YUAN, Linjie, Shenzhen, Guangdong 518129 (CN); TU, Linlin, Shenzhen, Guangdong 518129 (CN)
(74) Representative: Pfenning, Meinig & Partner mbB
(86) International application number: PCT/CN2024/102969
(87) International publication number: WO 2025/066384

(57) **Abstract**

This application is applied to the field of terminal technologies, and provides a content editing method, a medium, and an electronic device. The method includes: for an operation performed by a user on content data, storing only an instruction corresponding to the operation, and only after the user performs a plurality of operations, storing corresponding content data obtained after the plurality of operations. In this way, a terminal device does not need to store content data corresponding to each operation. This saves storage space occupied by an editing-type application. In addition, because an amount of stored data is reduced, the instructions and the content data can be directly stored in a cache. Further, when a redo or undo operation is performed, a corresponding instruction and content data can be read from the cache with a higher read speed. This improves efficiency for performing a redo or undo function.

## Description

This application claims priority to Chinese Patent Application No. 202311269706.3, filed with the China National Intellectual Property Administration on September 27, 2023 and entitled "CONTENT EDITING METHOD, MEDIUM, AND ELECTRONIC DEVICE", which is incorporated herein by reference in its entirety.

### TECHNICAL FIELD

This application relates to the field of terminal technologies, and in particular, to a content editing method, a medium, and an electronic device.

### BACKGROUND

A user can generate or edit content such as a document, an image, or a video on applications (applications, APPs) on a terminal device like a mobile phone or a computer. The editing-type applications also have undo and redo functions. To implement the undo and redo functions of the editing-type application, content modified by the user each time needs to be stored. A drawing application is used as an example. Pixel data of a modified image is stored as one data version after one operation of the user is obtained. When the user needs to roll back to or restore to an operation, the drawing application reads, from a storage of the terminal device, pixel data of a corresponding data version.

However, the content such as the document, the image, or the video needs to occupy large data storage space, and as a result, the editing-type applications need to occupy large storage space to store content data modified each time. However, content data of a plurality of historical data versions cannot be stored in a cache due to smaller space of the cache of the terminal device, and can be stored only in a memory with larger storage space but a lower data read speed in the terminal device. When an operation needs to be undone or redone, the terminal device can read a required data version only from the memory with the lower read speed. This results in a large quantity of input/output (input/output, I/O) overheads, and reduces time for performing an undo or redo operation.

### SUMMARY

This application provides a content editing method, a medium, and an electronic device, to shorten time consumed for an undo or redo operation.

According to a first aspect, a content editing method is provided and includes: obtaining first content; receiving a plurality of operations on the first content; storing instructions corresponding to the plurality of operations; storing second content obtained after the plurality of operations are performed based on the first content; and receiving an undo operation, and obtaining, based on the first content, content corresponding to the undo operation.

In the foregoing solution, the content data may be specifically image data corresponding to a drawing application, text data corresponding to a document editing-type application, video data corresponding to a video editing-type application, or the like. For each operation, the terminal device only stores an instruction corresponding to the operation, and does not need to store content data corresponding to the operation. This saves storage space occupied by an editing-type application. Only when a plurality of operations are obtained, content data corresponding to the operations is stored, that is, an archive point of the content data is generated. Optionally, for an operation whose corresponding content data is stored, an instruction corresponding to the operation may not be stored. This further reduces instructions that need to be stored, and reduces occupation of storage space of the terminal device. When the user needs to undo an operation, the terminal device can start to perform restoration from a latest archive point of a data version that needs to be restored to. The foregoing solution can be used to shorten time consumed by the undo or redo operation.

With reference to the first aspect, in some implementations, storing the instructions corresponding to the plurality of operations includes: storing the first content and the instructions corresponding to the plurality of operations.

In the foregoing solution, each operation is associated with the archive point. For example, the terminal device determines a unique identifier for each archive point and instruction. After a new archive point is generated, association information is also generated, where the association information records a unique identifier of the new archive point. In addition, each time an operation is received, a unique identifier of the operation is recorded in the association information of the new archive point. The archive point corresponding to the operation can be determined by using the association information, and an operation instruction is executed based on the archive point, so that content data can be restored to a corresponding data version that needs to be restored to. The foregoing solution can be used to shorten time consumed by the undo or redo operation.

With reference to the first aspect, in some implementations, the method further includes: obtaining the undo operation for returning to a first operation, where the first operation is one of the plurality of operations; determining, based on the first content and the first operation, a plurality of first previous operations that are stored before the first operation in the plurality of operations; and performing the plurality of first previous operations based on the first content, to obtain the first intermediate content corresponding to the first operation.

In the foregoing solution, because the first operation occurs between the first content and the second content, an archive point closest to the first operation is the first content. When the user needs to undo an operation, the terminal device can execute, starting from the latest archive point of a data version that needs to be restored to, based on the archive point, instructions corresponding to operations between the data version that needs to be restored to and the archive point, to restore the content data to the corresponding data version that needs to be restored to. The foregoing solution can be used to shorten time consumed by the undo or redo operation.

With reference to the first aspect, in some implementations, the method further includes: determining, based on the first operation, that content recently stored before the first operation is the first content.

In the foregoing solution, the content data recently stored before the operation may be determined based on execution time corresponding to the operation and storage time of the content data, and the operation instruction is executed based on the content data, so that the content data can be restored to the corresponding data version that needs to be restored to. The foregoing solution can be used to shorten time consumed by the undo or redo operation.

With reference to the first aspect, in some implementations, the method further includes: receiving a plurality of operations on the second content; storing instructions corresponding to the plurality of operations on the second content; and storing third content obtained after the plurality of operations on the second content are performed based on the second content.

In the foregoing solution, when the user continues to perform an operation on the second content, the terminal device stores only an instruction corresponding to each operation, and does not need to store content data corresponding to each operation. This saves storage space occupied by the editing-type application. Content data corresponding to the operations is stored only when the plurality of operations are obtained. The foregoing solution can be used to shorten time consumed by the undo or redo operation.

With reference to the first aspect, in some implementations, the method further includes: receiving a redo operation, where the redo operation is used to restore from the first intermediate content corresponding to the first operation to second intermediate content corresponding to a second operation, and the second operation is one of the plurality of operations on the second content; determining, based on the second content and the second operation, a plurality of second previous operations that are stored before the second operation in the plurality of operations on the second content; and performing the plurality of second previous operations based on the second content, to obtain the second intermediate content.

In the foregoing solution, if the user needs to redo an undone operation, the user can execute, starting from the latest archive point of a data version that needs to be restored to, based on the archive point, instructions corresponding to operations between the data version that needs to be restored to and the archive point, to restore the content data to the corresponding data version that needs to be restored to. The foregoing solution can be used to shorten time consumed by the undo or redo operation.

With reference to the first aspect, in some implementations, the method further includes: receiving a redo operation, where the redo operation is used to restore from the first intermediate content corresponding to the first operation to second intermediate content corresponding to a second operation, and the second operation is one of the plurality of operations on the second content; obtaining the first intermediate content corresponding to the first operation; determining a plurality of operations between the first intermediate content and the second operation; and performing, based on the first intermediate content, the plurality of operations between the first intermediate content and the second operation, to obtain the second intermediate content corresponding to the second operation.

In the foregoing solution, if the user needs to redo an undone operation, the user may alternatively directly execute an instruction corresponding to an operation before the current content data and the data version that needs to be restored to. The user can directly execute the instruction without reading a large data amount of content data. This can reduce the time of the restoration process. In some implementations, the terminal device may further determine, based on a quantity of operations that need to be redone, whether to first read an archive point. If there are many operations to be redone, the terminal device may read the latest archive point of the data version that needs to be restored to. If there are few operations to be redone, the terminal device may directly execute the instruction corresponding to the operation that needs to be redone.

With reference to the first aspect, in some implementations, the method further includes: obtaining an undo operation for returning to a third operation, where the third operation is one of the plurality of operations on the second content; determining, based on the second content and the third operation, a plurality of third previous operations that are stored before the third operation in the plurality of operations on the second content; and performing the plurality of third previous operations based on the second content, to obtain third intermediate content corresponding to the third operation.

In the foregoing solution, because the third operation occurs between the second content and the third content, an archive point closest to the third operation is the third content. When the user needs to undo an operation, the terminal device can execute, starting from the latest archive point of a data version that needs to be restored to, based on the archive point, instructions corresponding to operations between the data version that needs to be restored to and the archive point, to restore the content data to the corresponding data version that needs to be restored to. The foregoing solution can be used to shorten time consumed by the undo or redo operation.

With reference to the first aspect, in some implementations, the method further includes: determining that the plurality of operations meet a preset condition, and storing the second content obtained after the plurality of operations are performed based on the first content, where the preset condition is determined based on at least one of a quantity of operations of the plurality of operations and a time span of the plurality of operations.

With reference to the first aspect, in some implementations, the preset condition includes at least one of the following: the quantity of operations included in the plurality of operations is greater than a first quantity threshold; and the time span of the plurality of operations is greater than a first time threshold.

In the foregoing solution, the preset condition may be that after a previous archive point is generated, a quantity of obtained operations reaches a preset quantity N1, or may be that a time elapsed since the previous archive point is generated exceeds preset time T1, or may be a condition determined by a combination of the quantity and the time is met. In this way, when the user needs to undo an operation, the terminal device can execute, starting from a latest archive point of a data version that needs to be restored to, based on the archive point, instructions corresponding to operations between the data version that needs to be restored to and the archive point, to restore content data to the corresponding data version that needs to be restored to. The foregoing solution can be used to shorten time consumed by the undo or redo operation.

With reference to the first aspect, in some implementations, the operation is an operation for modifying data of content.

In the foregoing solution, the terminal device further classifies operations, and classifies the operations into a reversible operation and an irreversible operation. The irreversible operation is an operation that is related to modification of content data, for example, a fill color operation, a draw shape operation, or the like. On the contrary, the reversible operation is an operation that is not related to modification of content data, for example, a select operation, a create layer operation, or the like. In this way, the terminal device stores content data only when irreversible operations that are related to modification of content data meet the preset condition and generates an archive point. When obtaining N1 consecutive reversible operations, the terminal device is not triggered to store content data. This avoids a case in which content data at a current archive point is consistent with content data at a previous archive point, reduces a quantity of versions of stored content data, and reduces occupied storage space.

With reference to the first aspect, in some implementations, the operation includes an operation combination, the operation combination includes a first modify operation for modifying the data of the content, and a second modify operation for modifying a modification range or modification data corresponding to the first modify operation, and the second modify operation is performed before the first modify operation.

In the foregoing solution, the terminal device may further classify reversible operations into an associated operation and an unassociated operation based on whether the reversible operations affect another operation. For the associated operation, the associated operation is associated with a subsequently performed irreversible operation, that is, the associated operation and an irreversible operation are used as an operation combination, and the associated operation and the irreversible operation together are also associated with a corresponding archive point.

With reference to the first aspect, in some implementations, the method further includes: comparing the first content with the second content, and determining content data that is in the second content and that is different from that in the first content; and storing the content data that is in the second content and that is different from that in the first content.

In the foregoing solution, the terminal device may further compare the content data that needs to be stored with data at a latest archive point, and store, at a current archive point, only a part of content data that is changed relative to the previous archive point, or only a part of content data that is changed relative to an initial archive point. This reduces storage space occupied by the content data.

With reference to the first aspect, in some implementations, storing the second content obtained after the plurality of operations are performed based on the first content includes at least one of the following: storing the second content in a read-only memory; and compressing the second content and then storing the compressed second content in a random access memory.

In the foregoing solution, the terminal device further performs hierarchical storage on an archive point. For example, the terminal device compresses the content data and then stores the compressed content data in the random access memory of the terminal device, or further commits a file to the read-only memory. When content data needs to be read, the content data at the archive point is decompressed and restored. This reduces storage space occupied by a graphics processing unit and another processor.

With reference to the first aspect, in some implementations, when the first content and the second content are image data, the method further includes: storing the second content in a cache of a graphics processing unit.

In the foregoing solution, for image data, when content data is read, the content data needs to be decompressed and restored to texture data that can be processed by the graphics processing unit. In this way, the content data does not need to be obtained from another storage. This improves efficiency of reading the content data.

With reference to the first aspect, in some implementations, the first content, the second content, and the third content include at least one piece of image data, video data, text data, and audio data.

In the foregoing solution, the editing-type application may be used to generate or edit content such as an image, a video, or a document. The content data may be specifically image data corresponding to a drawing application, text data corresponding to a document editing application, video data corresponding to a video editing application, or the like.

According to a second aspect, this application provides an electronic device, including a processor and a storage. The storage is configured to store instructions, the processor is configured to execute the instructions, and when executing the instructions, the processor performs the method described in the first aspect.

According to a third aspect, this application provides a computer-readable storage medium. The computer-readable storage medium stores instructions, and when the instructions are run on a computing device, the method described in the first aspect is performed.

According to a fourth aspect, this application provides a computer program product. The computer program product includes computer instructions, and when computer instructions are executed by a computing device, the computing device performs the method described in the first aspect.

In conclusion, according to the content editing method, the medium, or the electronic device provided in this application, the content data corresponding to each operation does not need to be stored. This saves storage space occupied by the editing-type application. In addition, because a data quantity of instructions corresponding to operations is small, and an amount of content data that needs to be stored is also reduced, the instructions and the content data can be directly stored in the cache. Further, when the redo or undo operation is performed, the corresponding instruction and content data can be read from the cache with a higher read speed. This improves efficiency for performing the redo or undo function.

### BRIEF DESCRIPTION OF DRAWINGS

To describe the technical solutions in embodiments of this application more clearly, the following briefly describes the accompanying drawings for describing embodiments.
FIG. 1 is a diagram of an interface of a drawing application according to an embodiment of this application;
FIG. 2 is a diagram of a drawing process according to an embodiment of this application;
FIG. 3 is a diagram of undoing and redoing a draw operation according to an embodiment of this application;
FIG. 4 is a diagram of storing instructions and archive points in a content editing method according to an embodiment of this application;
FIG. 5 is a diagram of an interface for selecting an undo function according to an embodiment of this application;
FIG. 6A is a diagram of a hardware structure of a terminal device according to an embodiment of this application;
FIG. 6B is a diagram of a software structure of a terminal device according to an embodiment of this application;
FIG. 6C is a diagram of a structure of a content editing module according to an embodiment of this application;
FIG. 7 is a diagram of storing some sub-blocks of an archive point according to an embodiment of this application;
FIG. 8 is a schematic flowchart of storing an instruction and an archive point in a content editing method according to an embodiment of this application;
FIG. 9 is a schematic flowchart of undo and redo operations in a content editing method according to an embodiment of this application;
FIG. 10 is a diagram of interaction between an undo stack and a redo stack according to an embodiment of this application;
FIG. 11 is a diagram of storing instructions and an archive point in a content editing method when operations are distinguished as reversible operations and irreversible operations according to an embodiment of this application;
FIG. 12 is a diagram of storing instructions and an archive point in a content editing method when reversible operations are distinguished as an associated operation and an unassociated operation according to an embodiment of this application;
FIG. 13 is a schematic flowchart of storing an instruction and an archive point in a content editing method when operations are distinguished as a reversible operation and an irreversible operation according to an embodiment of this application;
FIG. 14 is a schematic flowchart of undo and redo operations in a content editing method when operations are distinguished as a reversible operation and an irreversible operation according to an embodiment of this application; and
FIG. 15 is a diagram of a structure of a content editing apparatus according to an embodiment of this application.

### DESCRIPTION OF EMBODIMENTS

The illustrative embodiments of this application include, but are not limited to, a content editing method, a medium, and an electronic device.

As described above, an editing-type application on a terminal device may be used to generate or edit content such as an image, a video, or a document. For example, a user may draw a picture on the terminal device by using a drawing application, and the terminal device generates, based on user operations, an image including one or more layers. For another example, a user may add or modify a background, a subtitle, audio, transition special effect, or the like to a video by using a video editing-type application, so that the terminal device can generate one or more new videos.

The editing-type applications usually also have functions of undo and redo operations. An undo function refers to canceling an operation performed by a user, and rolling back content to a previous data version. After a user performs the undo operation, the undone operation can be restored by using a redo function.

The following describes, by using an example in which the terminal device is a personal computer (personal computer, PC) and the editing-type application is a drawing application, an example of a process of implementing the undo function and the redo function by using the drawing application on the PC.

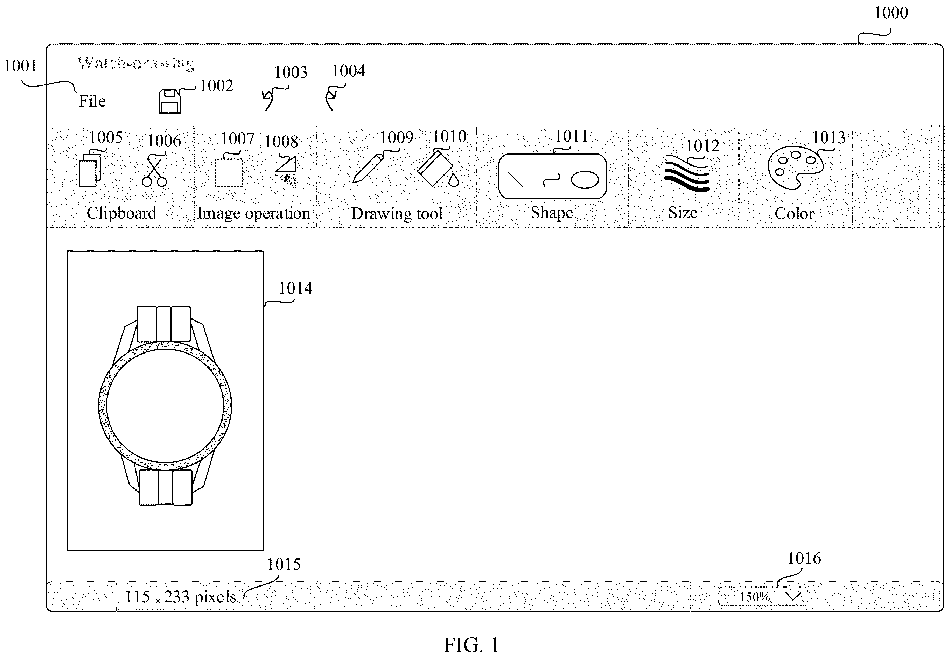

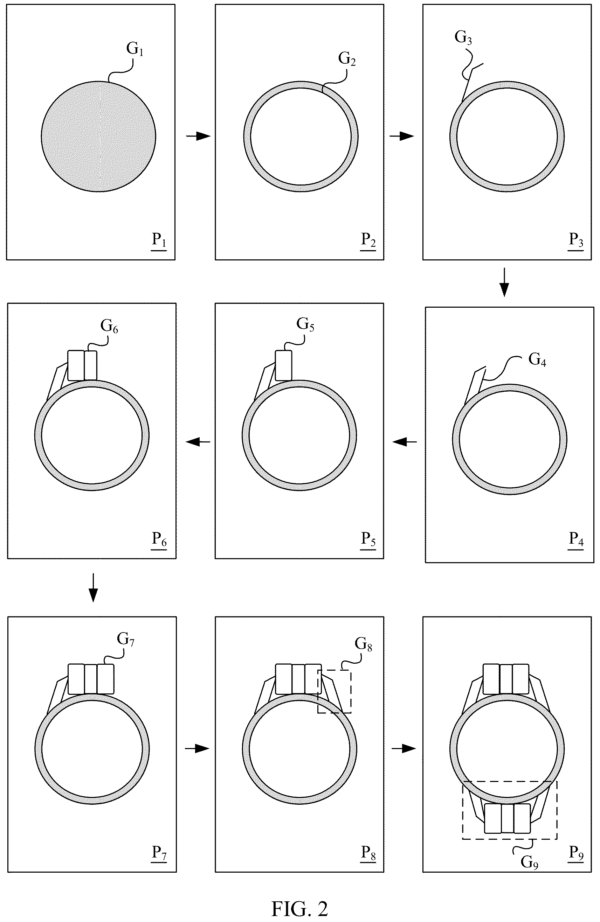

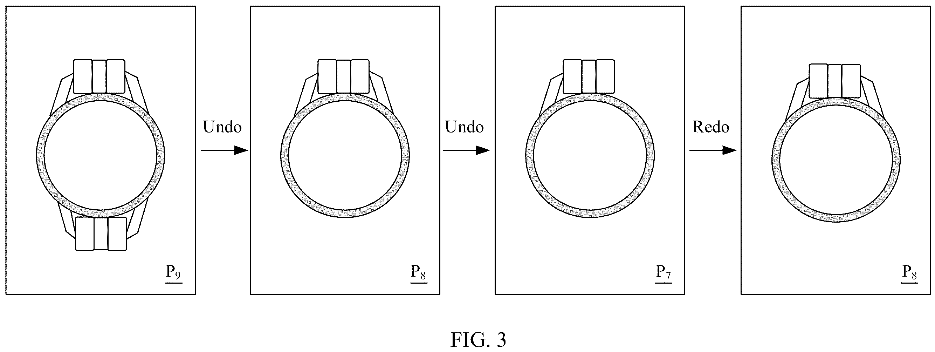

For example, FIG. 1 shows an interface 1000 of the drawing application. The interface 1000 includes a control 1001 to a control 1013, a canvas 1014, a pixel display area 1015, and a zoom ratio control 1016. The control 1001 may be used to open an image stored in the PC. The control 1002 may be used to save an image of a watch in an area of the canvas 1014 to a storage of the PC as a file name "watch". The control 1003 may be used to undo a user operation. The control 1004 may be used to redo an operation undone by the user. Detailed content of the "undo" control 1003 and the "redo" control 1004 is described in detail below with reference to FIG. 2 and FIG. 3. In addition, a user may further perform operations in the area of the canvas 1014 via the control 1005 to the control 1013. The control 1005 to the control 1013 specifically include the "copy" control 1005 and the "cut" control 1006 that belong to a clipboard type, the "area select" control 1007 and the "rotate" control 1008 that belong to an image operation type, the "paintbrush" control 1009 and the "fill color" control 1010 that belong to a drawing tool type, the control 1011 used to draw a preset shape, the control 1012 used to select a paintbrush or a line size of a preset shape, and the control 1013 used to select a color.

It should be understood that FIG. 1 is merely an example of an interface of a drawing application, and another drawing application may further include more or fewer controls. This is not specifically limited in this application.

The user may draw the image in the area of the canvas 1014 via one or more of the control 1005 to the control 1013. For example, for a process in which the user gradually draws to obtain the image in the canvas 1014 in FIG. 1, refer to FIG. 2. As shown in FIG. 2, the user sequentially performs a plurality of operations on the blank canvas, and modified shapes corresponding to the operations are G₁ to G₉. Images obtained based on the shapes G₁ to G₉ are P₁ to P₉.

To implement the undo and redo functions of the drawing application, the drawing application needs to store pixel data of the foregoing images P₁ to P₉, for example, store the pixel data in the storage of the PC. When the drawing application obtains an operation that the user selects to perform the undo function or redo the function, pixel data of an image of a corresponding version is read from the storage of the PC, and a corresponding image is displayed in the canvas 1014.

For example, as shown in FIG. 3, after the user draws to obtain the image P₉, when the terminal device obtains an operation of selecting the undo function by the user, for example, the user clicks the "undo" control 1003, the drawing application undoes the operation corresponding to the shape G₉, reads, from the storage of the PC, the pixel data of the image P₈ corresponding to the previous shape G₈ of the shape G₉, and displays the image P₈ on the canvas 1014. In addition, the redo function can redo the operation of drawing the shape G₉ at most in this case. After undoing the operation corresponding to the shape G₉, the user clicks the "undo" control 1003 again, and the drawing application reads and displays the image P₇ from the storage of the PC. In addition, in this case, the operations of drawing the shapes G₉ and G₈ by the user may be redone by using the redo function. For example, if the user clicks the "redo" control 1004, the drawing application reads and displays the image P₈.

However, the terminal device needs to occupy large storage space to store the images of different versions. A terminal device needs 4 bytes (bytes) to store data of a pixel. If a user selects a canvas with a resolution of 4096 _{×} 2160 (4K), for storing a single layer of an image, the terminal device needs to occupy a memory of 4096 _{×} 2160 _{×} 4 bytes, about 33.75 megabytes (megabytes, MB). In other words, for one operation of the user, the terminal device needs to store pixel data of 33.75 MB. If the user performs 150 operations, the terminal device needs to store pixel data of 33.75 MB _{×} 150, about 5 gigabytes (gigabytes, GB).

In other words, to implement the foregoing undo function or redo function, or other functions such as an auto-backup function and an auto-restoration function, the editing-type application needs to occupy large storage space of the terminal device. In addition, a random access memory (random access memory, RAM) technology is usually used for a cache of the terminal device, a read-only memory (read-only memory, ROM) technology is usually used for the memory, and therefore a speed of reading data by terminal device from the cache is faster than a speed of reading data from the memory. When an amount of content data that needs to be stored is large, the terminal device can read, only from the memory with the lower read speed, content, of a data version, that needs to be rolled back to or restored to, this reduces a running rate of the editing-type application. In addition, if the editing-type application stores, in another device, a plurality of data versions that need to be stored, the terminal device needs to spend longer time reading the content data from the another device.

To resolve the problem of occupying large storage space for storing the content of different data versions to implement the undo function, the redo function, the auto-backup function, and another function of the editing-type application, this application provides a content editing method. The method is applied to a terminal device 100. An editing-type application like a drawing application, a document editing-type application, or a video editing-type application, is installed on the terminal device 100. After obtaining an operation performed by a user on the editing-type application, the terminal device 100 stores an instruction corresponding to the operation, and the instruction includes information such as an operation range and an operation type. The instruction is specifically a program data structure generated based on the operation, for example, an object (object) defined by a Java language, a command prompt (command prompt, CMD) instruction, or a shell (shell) command. Further, the terminal device 100 does not need to store content data corresponding to each operation, for example, an image or a document. This saves storage space occupied by the editing-type application.

In addition, when the user performs a plurality of operations and the plurality of operations meet a preset condition, content data corresponding to the plurality of operations is also stored, that is, archive points of content data are generated. The content data may be specifically image data corresponding to a drawing application, text data corresponding to a document editing-type application, video data corresponding to a video editing-type application, or the like. For example, the preset condition may be that a quantity of a plurality of operations obtained after a previous archive point is generated reaches a preset quantity N1, or may be that a time span of the plurality of operations exceeds preset time T1, or that time from which a previous archive point is generated exceeds preset times T1, or may be that a condition determined by a combination of the quantity and the time is met, where N1 is a positive integer, and T1 is a positive number.

In this way, when the user needs to undo an operation, the terminal device 100 can execute, starting from a latest archive point of a data version that needs to be restored to, based on the archive point, instructions corresponding to operations between the data version that needs to be restored to and the archive point, to restore content data to the corresponding data version that needs to be restored to. The foregoing solution can be used to shorten time consumed by the undo or redo operation.

Optionally, when obtaining an operation of creating content or opening stored content by the user on the editing-type application, the terminal device 100 further generates a first archive point based on content data on which an operation is currently not obtained. Alternatively, the terminal device 100 may generate a first archive point after obtaining a first operation.

Optionally, for operations that meet a preset condition, only content data corresponding to the operations may be stored as an archive point, and instructions corresponding to the operations are not stored. This further reduces an amount of data that needs to be stored, and saves storage space.

Optionally, the terminal device 100 further associates an instruction corresponding to an operation after each archive point with the archive point. For example, the terminal device 100 determines a unique identifier for each archive point and instruction. After a new archive point is generated, association information is also generated, where the association information records a unique identifier of the new archive point. In addition, each time an operation is received, a unique identifier of the operation is recorded in the association information of the new archive point.

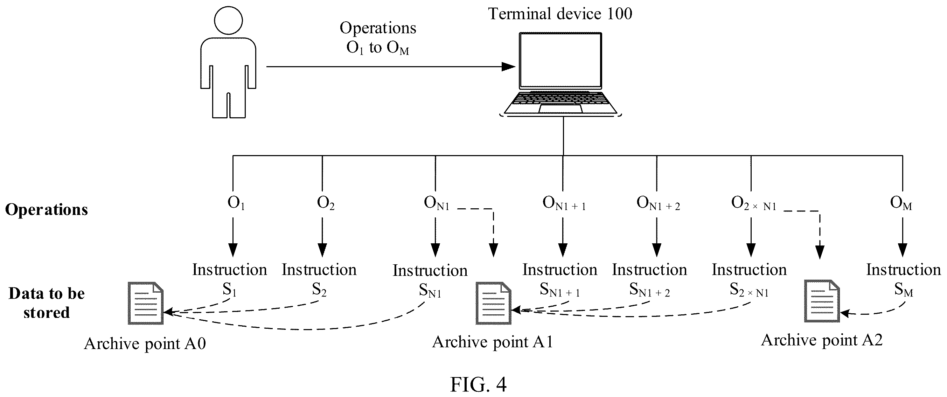

For example, when the preset condition is that the quantity of operations is the preset quantity N1, as shown in FIG. 4, when obtaining content created by the user, the terminal device 100 may first save the created content, that is, generate a first archive point A0.

When obtaining a first operation O₁ performed by the user based on the archive point A0, the terminal device 100 stores an instruction S₁ corresponding to the operation O₁. Then, when obtaining an operation O₂, of a next step, performed by the user, the terminal device stores an instruction S₂ corresponding to the operation O₂. The rest may be deduced by analogy. When obtaining an operation O_{N1} performed by the user, the terminal device stores an instruction S_{N1} corresponding to the operation O_{N1}. In addition, association information of the archive point A0 is generated, so that all of the instructions S₁ to S_{N1} are associated with the archive point A0.

Because a quantity of operations between the operation O_{N1} and the operation O₁ meets the preset quantity N1, for the N1^{th} operation O_{N1} performed by the user, the terminal device also stores modified content data corresponding to the instruction O_{N1}, and the content data may be specifically image data, text data, video data, or the like. The modified content data corresponding to the stored instruction O_{N1} is denoted as an archive point A1. For subsequent (N1 + 1)^{th} to (2 _{×} N1)^{th} operations, corresponding instructions are also stored, association information of the archive point A1 is generated, and S_{N1 + 1} to S_{2 × N1} are associated with the archive point A1.

When the operation O_{2 × N1} is obtained, because a quantity of operations between the operation O_{2 × N1} and the operation O_{N1} meets the preset quantity N1, for the operation O_{2 × N1} performed by the user, modified content data corresponding to the instruction O_{2 × N1} is also stored, and an archive point A2 is generated. For operations O_{2 × N1 + 1} to O_{M} that are subsequently performed by the user, instructions S_{2 × N1 + 1} to Sₘ that correspond to the instructions O_{2 × N1 + 1} to O_{M} are stored, and are associated with the archive point A2, where M is a positive integer greater than 2 _{×} N1 and less than or equal to 3 _{×} N1.

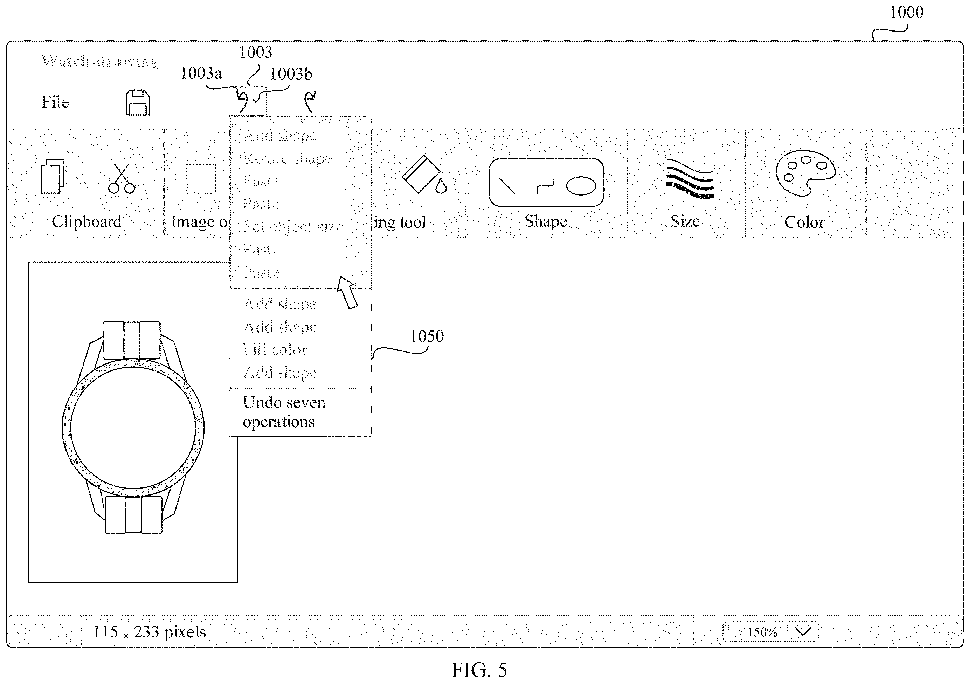

After the user executes the instruction S_{M}, the terminal device 100 obtains an undo operation performed by the user. The user may undo one or more operations. As shown in FIG. 5, the undo control 1003 specifically includes a control 1003a and a control 1003b. The user may click the control 1003a to undo a latest performed operation. The user may click 1003b to undo a plurality of operations. For example, after the user clicks the control 1003b, a window 1050 is displayed, and the window 1050 displays, based on an execution sequence of the user, operations performed by the user. If the user selects one of the operations, the selected operation and an operation performed after the operation may be undone.

For example, the user undoes a plurality of operations via the control 1003b. For example, the user needs to restore the edited content data to content data corresponding to the operation O_{N1 + 1}. In this case, the terminal device 100 reads latest content data stored before the operation O_{N1 + 1}, namely, the content data at the archive point A1, and reads an instruction corresponding to the operation between the archive point A1 and the operation O_{N1 + 1}, namely, S_{N1 +1}. Then, the terminal device 100 executes S_{N1 + 1} based on the content data at the archive point A1, to restore to the content data corresponding to the operation O_{N1 + 1}.

After the user undoes the operation, the user may further redo the undone operation. Similarly, the user may redo one or more undone operations. After the user rolls back to the content data corresponding to the operation O_{N1 + 1}, when the user needs to restore to the content data corresponding to the O_{M}, the terminal device 100 may first read the archive point A2, and then execute the instructions S_{2 × N1 + 1} to the Sₘ based on the archive point A2. Alternatively, the terminal device 100 may directly execute the instructions S_{N1 + 1} to Sₘ based on the content data corresponding to the operation O_{N1 + 1}, to obtain the content data corresponding to the O_{M}.

An operation process shown in FIG. 2 is used as an example. When N1 is 3, and a first archive point is generated after the user performs a first operation, the terminal device 100 only needs to store the images P₁, P₄, and P₇, and the instructions for drawing the shapes G₂ and G₃, the shapes G₅ and G₆, and the shapes G₈ and G₉. The instructions for drawing the shapes G₂ and G₃ are associated with an archive point of the image P₁, the instructions for drawing the shapes G₅ and G₆ are associated with an archive point of the image P₄, and the instructions for drawing the shapes G₈ and G₉ are associated with an archive point of the image P₇.

The terminal device 100 may also store the instructions for drawing the shapes G₁ and G₉. The instructions for drawing the shapes G₁ to G₃ are associated with the archive point of the image P₁, the instructions for drawing the shapes G₄ to G₆ are associated with the archive point of the image P₄, and the instructions for drawing the shapes G₇ to G₉ are associated with the archive point of the image P₇.

In this way, the terminal device 100 saves storage space occupied by the editing-type application. In addition, because a data quantity of instructions corresponding to operations is small, and an amount of content data that needs to be stored is also reduced, the instructions and the content data can be directly stored in the cache. Further, when the redo or undo operation is performed, a corresponding instruction and content data can be read from the cache with a higher read speed. This improves efficiency for performing the redo or undo function.

In addition, if the terminal device 100 stores only instructions corresponding to operations, when the terminal device 100 needs to undo an operation, because the terminal device 100 learns of only an instruction corresponding to each operation, for undoing an operation, the terminal device 100 does not learn of content data before the operation is performed. For example, for the operations shown in FIG. 2, only instructions corresponding to the shapes G₁ and G₂ are stored. If directly undoing the shape G₂, the terminal device 100 does not learn that an area in which the shape G₂ is located is previously gray shown in the shape G₁. As a result, pixel data in the area in which the shape G₂ is located is in a missing state, that is, the image shown in P₁ cannot be restored. Further, the terminal device 100 needs to perform, one by one from an initial data version, for example, a blank canvas, all operations before a data version that needs to be restored to. As a result, the undo operation is time-consuming.

However, in the content editing method provided in this application, in addition to instructions corresponding to operations, content data of the current data version is also stored after the preset condition. Further, only some instructions are executed from a latest archive point, so that content data can be restored to a corresponding data version. This shortens time consumed by the undo or redo operation, and reduces a workload of a processor.

The terminal device 100 may be specifically the foregoing PC, or may be another terminal device, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a dedicated camera (like a single-lens reflex camera or a compact camera). It should be understood that a specific type of the terminal device 100 is not limited in this application.

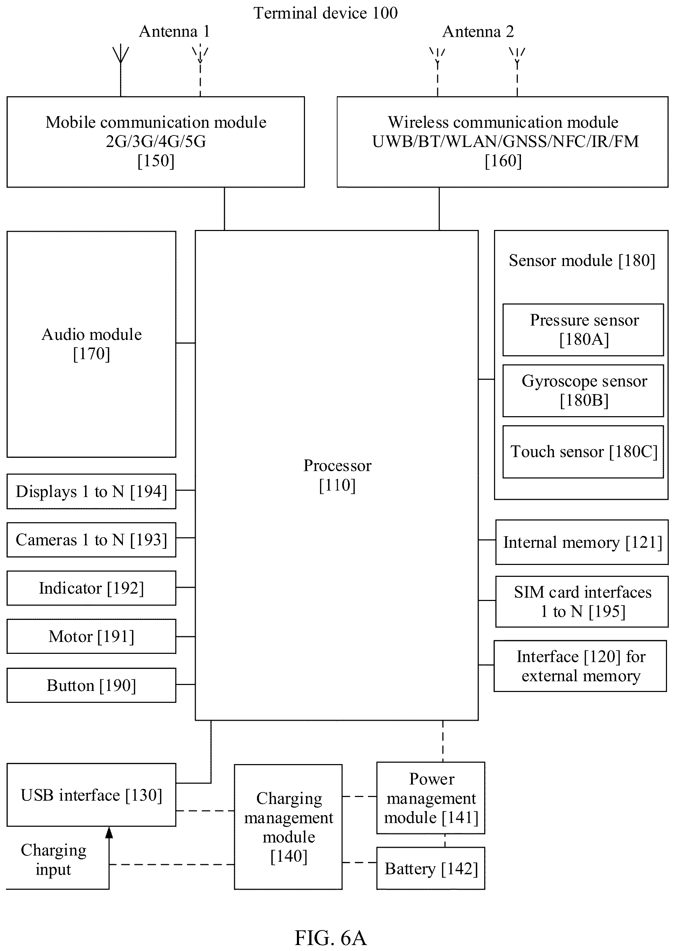

The following first describes the terminal device 100 in embodiments of this application. FIG. 6A is a diagram of a structure of an example of a terminal device 100 according to an embodiment of this application.

The terminal device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, and a subscriber identity module (subscriber identity module, SIM) card interface 195. The sensor module 180 may include a pressure sensor 180A, a gyroscope sensor 180B, a touch sensor 180C, and the like.

It may be understood that the structure shown in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, and the like. Different processing units may be independent components, or may be integrated into one or more processors.

The controller may be a nerve center and a command center of the terminal device 100. The controller may generate an operation control signal based on an instruction operation code and a time sequence signal, to complete control of instruction reading and instruction execution.

The storage may be disposed in the processor 110, and is configured to store instructions and data. In some embodiments, the storage in the processor 110 is a cache memory (cache for short). The storage may store instructions or data just used or cyclically used by the processor 110, for example, instructions corresponding to operations and content data. If the processor 110 needs to use the instructions or the content data again, the processor may directly invoke the instructions or the content data from the storage. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, and the like. It can be understood that an interface connection relationship between the modules shown in this embodiment of this application is merely an example for description, and constitutes no limitation on the structure of the terminal device 100. In some other embodiments of this application, different interface connection manners in the foregoing embodiments or a combination of a plurality of interface connection manners may alternatively be used for the terminal device 100.

The charging management module 140 is configured to receive charging input from a charger. The power management module 141 is configured to connect to the battery 142, the charging management module 140, and the processor 110. The power management module 141 receives input of the battery 142 and/or the charging management module 140, and supplies power to the processor 110, the internal memory 121, an external memory, and the display 194.

A wireless communication function of the terminal device 100 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. The mobile communication module 150 may provide a wireless communication solution that is applied to the terminal device 100 and that includes 2G, 3G, 4G, 5G, and the like. The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), and the like.

The terminal device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), or the like. In some embodiments, the terminal device 100 may include one or N displays 194, where N is a positive integer greater than 1.

In some embodiments of this application, the display 194 displays interface content currently output by a system. For example, the interface content is an interface provided by an editing-type application, for example, the interface shown in FIG. 1.

The terminal device 100 may implement a photographing function via the ISP, the camera 193, the video codec, the GPU, the display 194, the application processor, and the like. The camera 193 is configured to capture a static image or a video. The digital signal processor is configured to process a digital signal, and may process another digital signal in addition to the digital image signal. The video codec is configured to compress or decompress a digital video.

The interface 120 for external memory may be configured to connect to an external storage card, for example, a micro SD card, to extend a storage capability of the terminal device 100. The external memory card communicates with the processor 110 through the interface 120 for external memory, to implement a data storage function.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the terminal device 100. In addition, the internal memory 121 may include a high-speed random access memory, or may further include a non-volatile memory, for example, at least one magnetic disk storage device, a flash storage device, or a universal flash storage (universal flash storage, UFS).

In some embodiments of this application, the internal memory 121 may be configured to store operation instructions and content data that are related to the editing-type application.

The terminal device 100 may implement an audio function via the audio module 170, for example, music playing and recording. The audio module 170 is configured to convert digital audio information into an analog audio signal for output, and is also configured to convert analog audio input into a digital audio signal. In some embodiments, the audio module 170 may be disposed in the processor 110, or some functional modules in the audio module 170 are disposed in the processor 110.

The pressure sensor 180A is configured to sense a pressure signal, and can convert the pressure signal into an electrical signal. In some embodiments, the pressure sensor 180A may be disposed in the display 194. In some optional embodiments of this application, the pressure sensor 180A may be configured to obtain a touch operation (for example, a tap operation, a touch and hold operation, or a slide operation) of the user, which specifically includes capturing a pressure value generated when a finger part of the user touches the display, and transmitting the pressure value to the processor, so that the processor identifies a finger part by which the user enters the user operation.

The gyroscope sensor 180B may be configured to determine a motion posture of the terminal device 100. In some embodiments, an angular velocity of the terminal device 100 around three axes (an X axis, a Y axis, and a Z axis of the electronic device) may be determined via the gyroscope sensor 180B.

The touch sensor 180C is also referred to as a "touch panel". The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor. The touch operation is an operation that a user touches the display 194 by using a hand, an elbow, a stylus, or the like. The touch sensor may transfer the detected touch operation to the application processor to determine a type of a touch event. Visual output related to the touch operation may be provided on the display 194. In some other embodiments, the touch sensor 180C may alternatively be disposed on a surface of the terminal device 100 at a location different from that of the display 194.

The button 190 includes a power button, a volume button, and the like. The button 190 may be a mechanical button, or may be a touch button. The terminal device 100 may receive button input, and generate button signal input related to user setting and function control of the terminal device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a notification, and the like.

The SIM card interface 195 is configured to connect to a SIM card. The SIM card may be inserted into the SIM card interface 195 or removed from the SIM card interface 195, to implement contact with or separation from the terminal device 100.

It may be understood that the structure shown in this application does not constitute a specific limitation on the terminal device 100. In some other embodiments, the terminal device 100 may include more or fewer components than those shown in the figure, or combine some components, or split some components, or have different component arrangements. The components shown in the figure may be implemented by hardware, software, or a combination of software and hardware.

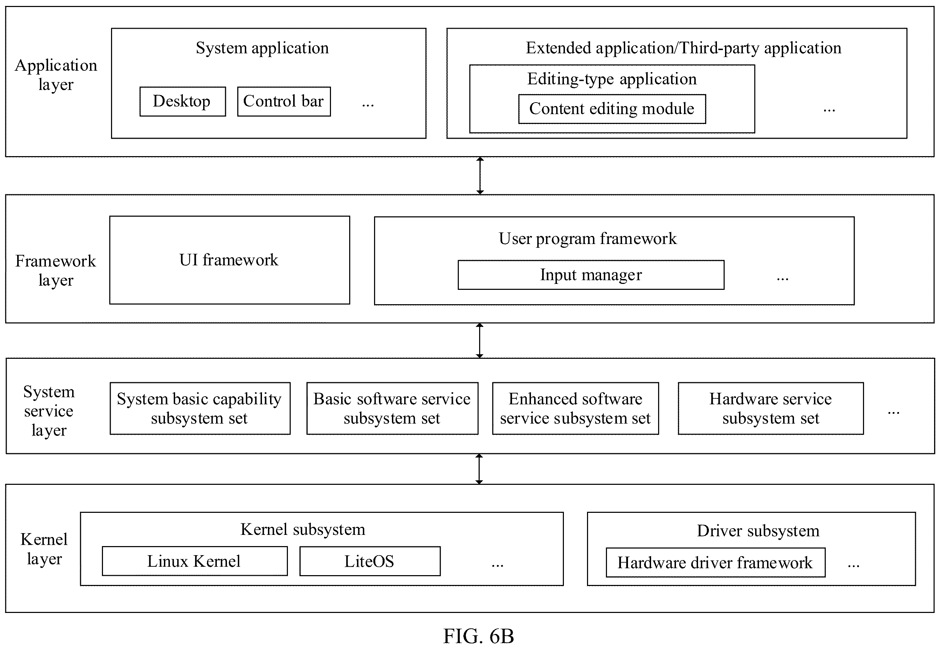

FIG. 6B is a block diagram of a software structure of the terminal device 100 according to this embodiment of this application.

In a layered architecture, software is divided into several layers, and each layer has a clear role and task. The layers communicate with each other through a software interface. In some embodiments, a system is divided into four layers: an application layer, a framework layer, a system service layer, and a kernel layer from top to bottom.

The application layer may include a series of application packages. As shown in FIG. 6B, the application layer includes an extended application (namely, a third-party application), and the third-party application may include an application developed by another organization or individual that is not a software compiler, for example, an editing-type application like a drawing application, a document editing application, or a video editing application in this application. It should be understood that the application layer further includes system applications, for example, applications such as a home screen (namely, a desktop), a control bar, or a setting.

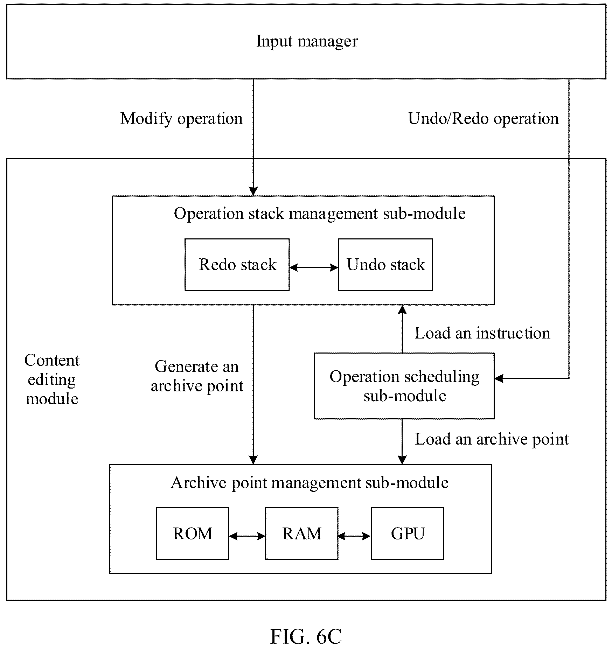

The editing-type application in this application further includes a content editing module, and the content editing module is configured to process an obtained operation. Specifically, an operation stack management sub-module, an operation scheduling sub-module, and an archive point management sub-module are included. For interaction between the sub-modules in the content editing module, refer to the following description about FIG. 6C.

The framework layer provides a user interface (user interface, UI) framework, a user program framework, and an application programming interface (application programming interface, API) for the application at the application layer. The framework layer further includes some predefined functions. The user program framework may include an input manager and a content editing module. The framework layer may further include a window manager, a content provider, and the like, which are not shown in the figure.

The input manager is configured to receive instructions or an operation event reported by a lower layer like the kernel layer. In this application, the input manager may be configured to: monitor a user operation event obtained by a driver subsystem, encapsulate the detected user operation event into instructions, and report the instructions to the application layer, specifically, send the instructions to the content editing module, and the content editing module distributes user operations. The user operation event specifically includes an undo operation, a redo operation, a modify operation, and the like.

The window manager is configured to manage a window program. In this application, the window manager is configured to display an interface of the editing-type application on the terminal device 100.

The content provider is configured to: store and obtain data, and enable the data to be accessed by an application. For example, the data may include content data such as a video, an image, and audio.

The system service layer is a set of core capabilities of the system. The layer includes a system basic capability subsystem set, a basic software service subsystem set, an enhanced software service subsystem set, and a hardware service subsystem set.

The system basic capability subsystem set provides a basic capability for operations such as running, scheduling, and migration of the application layer on the terminal device 100, and is formed by subsystems such as a distributed soft bus and distributed data management. The basic software service subsystem set provides a software service for the system, and is formed by subsystems such as an event notification, a phone, and multimedia. The enhanced software service subsystem set provides the system with a capability enhanced software service for different terminal devices 100, and is formed by subsystems such as an internet of things (internet of things, IoT) dedicated service and a smart screen dedicated service. The hardware service subsystem set provides a hardware service for the system, and is formed by subsystems such as an IoT dedicated hardware service and a location service.

The kernel layer is a layer between hardware and software. The kernel layer includes a kernel subsystem and a driver subsystem. The kernel subsystem includes the Linux kernel and LiteOS, and provides a basic kernel capability for an upper layer, including process/thread management, memory management, file system management, network management, peripheral management, and the like. The driver subsystem includes at least a hardware driver framework, for example, a driver function of an input device like a display driver, a camera driver, an audio driver, a sensor driver, or a touch driver. In this application, the driver subsystem may be configured to: obtain an event like an operation performed by a user via an input device (for example, a mouse, a keyboard, or a touchscreen), and report the event to the input manager.

As shown in FIG. 6C, the content editing module includes the operation stack management sub-module, the operation scheduling sub-module, and the archive point management sub-module

The input manager is configured to receive operation events reported by the driver subsystem at the kernel layer, for example, an operation performed by the user on content data, an undo operation, and a redo operation. The operation performed by the user on the content data may be a modify operation that is related to modification of content data, or may be another operation that is not related to modification of content data, for example, a select operation. In FIG. 6C, an example in which the operations performed on the content data are modify operations is used for description. The input manager encapsulates the operation event into corresponding instructions. The input manager also sends, to the operation stack management sub-module, the instructions corresponding to the modify operations, and sends, to the operation scheduling sub-module, the instruction corresponding to the undo operation and the instruction corresponding to the redo operation.

The operation stack management sub-module may store the operations in an undo (undo) stack when the input manager detects the operations. In addition, when it is determined that the obtained modify operations meet a preset condition, for a next modify operation of the user, an instruction for generating an archive point is further sent to the archive point management sub-module, and the archive point management sub-module stores current content data.

When the obtained operations meet the preset condition, for the modify operations of the user, the archive point management sub-module may store the content data generated after the modify operations, that is, generate an archive point.

In addition, the archive point management sub-module may further store the archive point in one or more storages such as a ROM, a RAM of a CPU, and/or a RAM of a GPU. For example, when storage space of the RAM of the CPU is sufficient, the archive point management sub-module may compress the content data and store the compressed content data in the RAM memory of the CPU. In addition, the archive point management sub-module may alternatively directly commit the archive point into the ROM, and decompress and restore the content data at the archive point when the content data needs to be read. When storage space of the RAM of the CPU is insufficient, the archive point management sub-module may store the archive point only in the ROM.

For another example, when the content data is image data, the terminal device 100 specifically processes the image via the GPU, and the RAM of the GPU needs to obtain texture data of the image data. Therefore, the archive point management sub-module may directly store the texture data in the RAM of the GPU. When storage space of the RAM of the GPU is insufficient, the image data may also be stored in the RAM of the CPU, or stored in the ROM. When the content data needs to be read, the image data is decompressed and restored to the texture data that can be processed by the GPU. Further, the storage space of the GPU does not need to be occupied to store the texture data. This saves storage space of the GPU and/or the CPU.

Optionally, the archive point management sub-module may further compare the content data that needs to be stored with data at a latest archive point, and store, at a current archive point, only a part of content data that is changed relative to the previous archive point, or only a part of content data that is changed relative to an initial archive point.

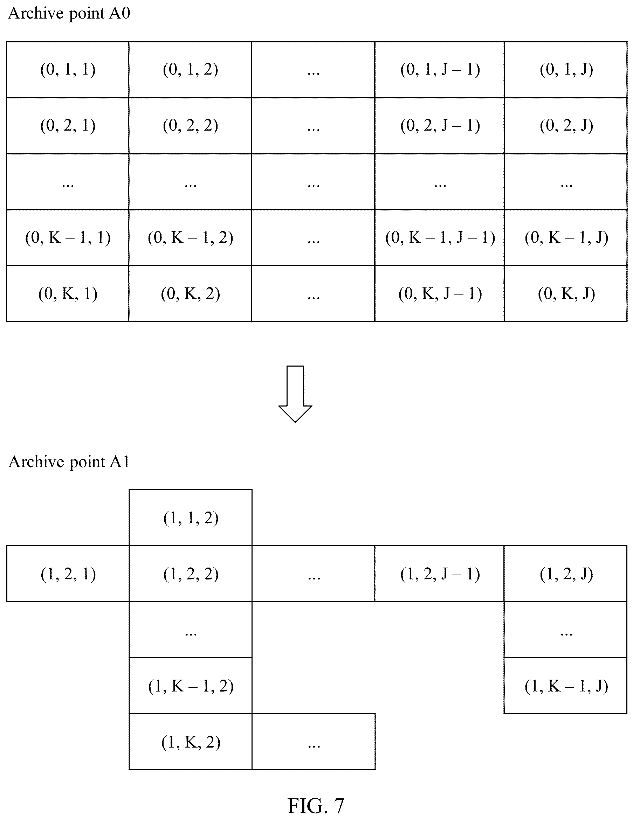

For example, the content data is image data. The archive point management sub-module may divide the image data into a plurality of sub-blocks, and each sub-block may include a plurality of pixels. The archive point management sub-module further numbers each archive point and each sub-block in the archive point, for example, generates an index (X, J, K), where X is an archive point number, J is a row number of the sub-block, and K is a column number of the sub-block. As shown in an upper half part in FIG. 7, a generated first archive point A0 may be fully stored, that is, pixel data of each sub-block is stored. As shown in the upper half part in FIG. 7, all sub-blocks in columns in (0, 1, 1) to (0, 1, J) are stored. At a generated second archive point A1, only sub-blocks with pixel data changes relative to the archive point A0 may be stored, for example, sub-blocks such as (1, 1, 2), (1, 2, 1), and (1, 2, 2) shown in a lower half part of FIG. 7.

The operation scheduling sub-module is configured to schedule the undo operation and the redo operation. When obtaining the undo operation, the operation scheduling sub-module obtains, from the archive point management sub-module, the latest archive point of the data version that needs to be restored to, and obtains, from the undo stack, an instruction corresponding to an operation between the archive point and the data version that needs to be restored to. Then, the operation scheduling sub-module executes the corresponding instruction based on the obtained archive point, to obtain the content data that needs to be restored to.

In addition, after the operation scheduling sub-module reads the instruction in the undo stack, the operation stack management module also moves the read instruction corresponding to the operation from the undo stack to a redo (redo) stack. After obtaining the redo operation, the operation scheduling sub-module reads, from the redo stack, an instruction corresponding to the operation that needs to be redone.

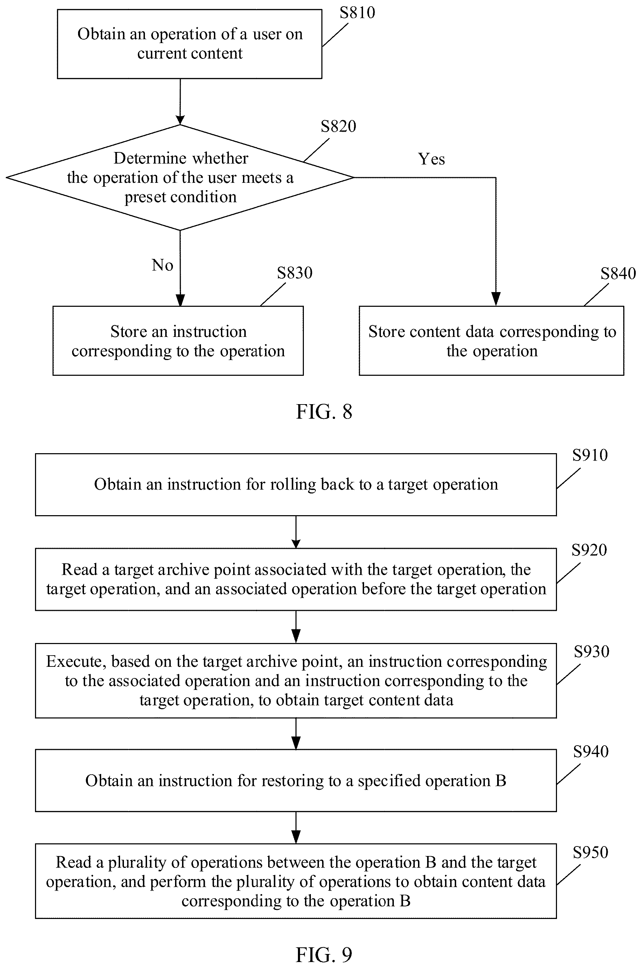

The following describes a data storage procedure in a content editing method provided in this application. The method is applied to the terminal device 100, and an editing-type application is installed on the terminal device 100. As shown in FIG. 8, the procedure includes the following steps.

S810: Obtain an operation of a user on current content.

When the terminal device 100 starts the editing-type application, the user may create content or modify stored content data on the editing-type application. The content data may be specifically one or more of formats such as an image, a document, a video, and audio. The user may perform a select operation, an edit operation, or the like on the content of a current data version by using a function provided by the editing-type application. The terminal device 100 may obtain, via the driver subsystem in FIG. 6B, the operation performed by the user via an input device. It should be understood that, after the operation of the user is obtained, the editing-type application further displays, on an interface, content data obtained after the operation.

The operation obtained by the terminal device 100 may be a series of combined operations performed by the user, or may be a single operation performed by the user. For example, for some operations, the user needs to first select a control in the editing-type application, and then modify the content data based on the selected control. For example, in the drawing application shown in FIG. 1, the terminal device 100 detects a select operation (for example, a click operation), of the user, on the "paintbrush" control 1009 in the drawing application, and then obtains that the user draws a shape in the area of the canvas 1014 based on the "paintbrush" control 1009, to determine that the user performs the operation on the content data. However, for some operation types, the user does not need to select a corresponding control for execution. For example, the user may directly drag some patterns in the canvas 1014 to change locations of the patterns.

Based on the obtained operation, the terminal device 100 determines information such as an operation type, an operation range, and/or added content data of the operation. Then, based on the information of the operation, the operation is encapsulated into a corresponding instruction. Optionally, that the terminal device 100 encapsulates the operation into the corresponding instruction may be specifically performed by the input manager in FIG. 6B.

The operation type of the operation may include deleting, cutting, moving, adding content, and the like. The operation range corresponds to a location of the operation in the current content data, for example, coordinates of pixels in an image data, a quantity of image frames in a video data, and/or coordinates of pixels in image frames in a video data. When the operation is adding content, the information of the operation further includes the content data added by the user, for example, content data such as a text or an image that is entered by the user or copied from another application.

S820: Determine whether the operation of the user meets a preset condition.

If determining that the operation does not meet the preset condition, the terminal device 100 performs step S830. If determining that the operation meets the preset condition, the terminal device 100 performs step S840.

The terminal device 100 obtains a latest generated archive point Aₗₐₛₜ. The preset condition may be that after the archive point Aₗₐₛₜ is generated, a quantity of obtained operations reaches a preset quantity N1, that is, the operation is an N1^{th} operation obtained after the archive point Aₗₐₛₜ is generated. Alternatively, the preset condition may be that time elapsed since the archive point Aₗₐₛₜ is generated exceeds preset time T1. Alternatively, the preset condition may be that a condition determined by a combination of the quantity and the time is met, or the like.

In some embodiments, the terminal device 100 further obtains a quantity of archive points and remaining storage space of a storage. The preset condition is dynamically adjusted when a quantity of archive points is large or the remaining storage space of the storage is less than a preset value. For example, the preset quantity N1 and the preset time T1 are increased, so that when the space of the storage is small. This can generate fewer archive points can be generated, and save storage space.

S830: Store the instruction corresponding to the operation.

When determining that the operation does not meet the preset condition, the terminal device 100 associates the instruction corresponding to the operation with the archive point Aₗₐₛₜ. For example, the terminal device 100 determines the archive point Aₗₐₛₜ and a unique identifier of the operation, and records the unique identifier of the operation in association information of the archive point Aₗₐₛₜ.

In addition, the terminal device 100 also stores, in the storage of the terminal device 100, the instruction corresponding to the operation. The terminal device 100 also manages the instruction and an instruction corresponding to another operation via the undo stack shown in FIG. 6C. For details, refer to the foregoing FIG. 6C and related descriptions thereof.

S840: Store the content data corresponding to the operation.

After determining that the operation meets the preset condition, the terminal device 100 generates a new archive point A_{new} based on the content data obtained after the operation is performed. In addition, the content data at the archive point A_{new} is stored in the storage. The archive point management sub-module shown in FIG. 6C manages the archive point.

Optionally, that the archive point management sub-module manages the archive point includes that the terminal device 100 may store the content data at the archive point A_{new} in a cache of a CPU, for example, store the content data in a RAM of the terminal device 100, or may compress the content data and store the compressed content data in a cache of a CPU. The terminal device 100 may further commit the content data to a memory, for example, store the content data into a ROM of the terminal device 100. Therefore, when a GPU or another processor needs to read the content data at the archive point A_{new}, the content data may be obtained from the RAM or the ROM. This reduces storage space occupied in the GPU and the another processor.

Optionally, for example, for image data, the terminal device 100 may also directly store texture data of the content data in a cache of a GPU. Therefore, the GPU of the terminal device 100 can directly read, without obtaining the content data from a RAM or a ROM, the content data stored in the GPU. This improves efficiency of reading the content data.

Optionally, the terminal device 100 may also compare the archive point A_{new} with the archive point Aₗₐₛₜ, and store only a part of content data, at A_{new}, changed relative to the archive point Aₗₐₛₜ. Alternatively, the terminal device 100 may compare the archive point A_{new} with an initial archive point A0 (a first archive point), and store only a part of content data changed relative to the initial archive point A0. This can reduce a stored data amount, and reduce occupied storage space. For details, refer to FIG. 7 and related descriptions thereof.

Optionally, for the operation that meets the preset condition, in addition to generating and storing the archive point A_{new}, the terminal device may also store the instruction corresponding to the operation, and associates, with the archive point Aₗₐₛₜ, the instruction corresponding to the operation. For example, the association information of Aₗₐₛₜ is generated, and the unique identifier of the operation is recorded in the association information.

In this way, a corresponding instruction is stored for each operation. After the terminal device 100 performs an operation for rolling back to a previous operation of the archive point A_{new}, when the terminal device 100 needs to restore the content to a data version corresponding to the archive point A_{new}, the terminal device 100 may execute, based on data content of the previous operation of the archive point A_{new}, an instruction corresponding to the operation. Because a data quantity of instructions is smaller than that of the content data, reading the instruction is faster than reading the content data. In addition, because the data quantity of the instruction is smaller, the instruction may be stored in the cache with a higher read speed. This shortens time for reading data, and improves efficiency of performing the undo operation.

Optionally, if the terminal device 100 has not generated an archive point, the preset condition may further include obtaining an operation of creating content or opening stored content by the user on the editing-type application, or obtaining that the user performs a first operation based on created content or opened stored content. If the terminal device 100 meets the foregoing preset condition, a first archive point is generated.

Optionally, the terminal device 100 further stores instructions corresponding to only a first preset quantity of operations. For an operation performed before the first preset quantity of operations, an instruction corresponding to the operation is deleted from the storage, and for an archive point not associated with the operations, the archive point is also deleted from the storage. For example, the terminal device 100 stores instructions corresponding to a maximum of 200 latest obtained operations, and for an operation performed before the latest 200 operations, a corresponding stored instruction is deleted from the storage. In addition, an archive point that is not associated with the 200 operations is also deleted.

Optionally, the terminal device 100 may further store only a second preset quantity of archive points. An archive point stored before the second preset quantity of archive points and operations associated with the archive points are deleted from the storage. For example, the terminal device 100 stores a maximum of two archive points, and an archive point stored before the two latest generated archive points and operations associated with the archive points are deleted from the storage.

Optionally, if the terminal device 100 obtains an operation of the user again, the terminal device 100 also repeatedly performs related steps in step S810 to step S840.

In this way, the terminal device 100 does not need to store content data corresponding to each operation. This saves storage space occupied by the editing-type application. In addition, because a data quantity of instructions corresponding to operations is small, and an amount of content data that needs to be stored is also reduced, the instructions and the content data can be directly stored in the cache. Further, when the redo or undo operation is performed, a corresponding instruction and content data can be read from the cache with the higher read speed. This improves efficiency for performing the redo or undo function.

The following describes a data undo and redo procedure in a content editing method provided in this application. As shown in FIG. 9, the procedure includes the following steps.

S910: Obtain an instruction for rolling back to a target operation.

A user can undo a performed operation based on an undo function provided by an editing-type application. The terminal device 100 may obtain, via a driver subsystem, an instruction executed by the user after rolling back to the target operation.

The user may undo one or more operations at a time. For example, the user may undo performed operations one by one by selecting an "undo" control provided by the editing-type application or by using another shortcut button. The editing-type application may also display a list of a plurality of performed operations. For example, in FIG. 5, the user may select, based on the list, content data corresponding to the target operation that needs to be rolled back to, to undo all operations between the target operation and a last performed operation.

S920: Read a target archive point associated with the target operation, the target operation, and an associated operation before the target operation.

The terminal device 100 determines and reads the target archive point associated with the target operation. Alternatively, the terminal device 100 determines, based on time of an archive point, a latest archive point that is generated before the target operation and closest to the target operation. The terminal device 100 further reads, from an undo stack, an instruction corresponding to the associated operation between the target archive point and the target operation.

In addition, after reading the associated operation from the undo stack, the terminal device 100 also stores, in a redo stack, all instructions corresponding to operations after the target operation.

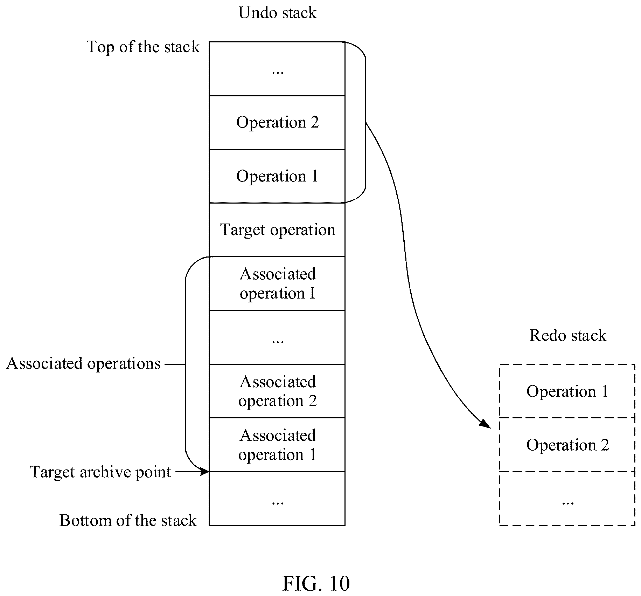

As shown in FIG. 10, the operation between the target archive point and the target operation is the associated operation. An operation performed after the target operation, namely, an undone operation, is stored in the redo stack.

S930: Execute, based on the target archive point, an instruction corresponding to the associated operation and an instruction corresponding to the target operation, to obtain target content data.

The terminal device 100 executes, based on the target archive point, the instruction corresponding to the associated operation and the instruction corresponding to the target operation, and can obtain, starting from content data corresponding to the target archive point, the corresponding target content data after the target operation is performed. Optionally, the terminal device 100 further displays, on an interface, a diagram of the target content data.

In this way, the terminal device 100 can execute only some instructions, starting from the latest archive point, and can restore the content data to a corresponding data version. This shortens time consumed by the undo or redo operation, and reduces a workload of a processor.

In some embodiments, after undoing an operation, the user may further redo the undone operation, and the terminal device 100 may further perform the following step S940 and step S950.

S940: Obtain an instruction for restoring to an operation B.

The operation B is one of undone operations, namely, the operation performed after the target operation. After the operation is undone, the operation is moved from the undo stack to the redo stack. The operation B is one operation in the redo stack.

S950: Read a plurality of operations between the operation B and the target operation, and perform the plurality of operations to obtain content data corresponding to the operation B.

The terminal device 100 may start reading from a top of the redo stack until the operation B is read, and the read operations are the plurality of operations between the operation B and the target operation. The terminal device 100 performs the plurality of operations between the operation B and the target operation based on the content data corresponding to the current target operation, to obtain the content data corresponding to the operation B. The terminal device 100 further displays, on the interface, a diagram of the content data corresponding to the operation B.

Optionally, if the terminal device 100 determines that there is still an archive point between the operation B and the target operation, the terminal device 100 may first directly read an archive point associated with the operation B, then perform only an operation associated with the archive point until the operation B is performed, and can obtain content data corresponding to the operation B.

Optionally, the terminal device 100 may further determine, based on a quantity of archive points or a quantity of operations between the operation B and the target operation, whether to first read the archive point.

If there are a large quantity of archive points between the operation B and the target operation, that is, there are a large quantity of operations, the terminal device 100 may read the archive point associated with the operation B, and then perform only the operation associated with the archive point until the operation B is performed. Therefore, for the operation that needs to be redone, the archive point is read first, so that a quantity of operations that need to be performed by the terminal device 100 can be reduced, and time of a restoration process can be reduced.

If there is no archive point, or there are a small quantity of archive points, that is, there are few operations, between the operation B and the target operation, the terminal device 100 may directly read and perform the operation between the operation B and the target operation. Therefore, the terminal device 100 directly executes an instruction without reading content data of an archive point with a large amount of data. This can reduce the time of the restoration process.

The following describes the redo operation by using an example with reference to FIG. 10. As shown in FIG. 10, because a stack stores data from a bottom of the stack and reads data from a top of the stack, in the undo stack, an operation at a bottom of the stack is an earliest obtained operation, and an operation at a top of the stack is a latest obtained operation; and in the redo stack, an operation at a bottom of the stack is an earliest undone operation, and an operation at the top of the stack is a last undone operation. Therefore, when an operation is read from the redo stack, the top of the stack stores a next operation performed by the user after the target operation is performed.

For example, the operation B is an operation 2 in FIG. 10. Because a quantity of operations that need to be redone is small, the terminal device 100 directly reads, from the top of the redo stack, instructions corresponding to operations, until the operation 2 is read. In this way, the operations read by the terminal device 100 include an operation 1 and the operation 2, and the terminal device 100 performs the operation 1 and the operation 2 based on the content data corresponding to the target operation, to obtain content data corresponding to the operation 2.

In conclusion, in the content editing method provided in this application, in addition to the instruction corresponding to the operation, the content data of the current data version is also stored after the preset condition. If the terminal device 100 stores only the instruction corresponding to the operation, when undoing an operation, the terminal device 100 needs to perform, one by one from the initial data version, all operations before the data version that needs to be restored to. As a result, the undo operation is time-consuming. However, according to the content editing method provided in this application, only some instructions can be executed starting from the latest archive point, so that the content data can be restored to the corresponding data version that needs to be restored to. This shortens time consumed by the undo or redo operation, and reduces the workload of the processor.

In some embodiments, the terminal device 100 further classifies operations, and classifies the operations into a reversible operation and an irreversible operation. The irreversible operation is an operation that is related to modification of content data. On the contrary, the reversible operation is an operation that is not related to modification of content data. For example, in the drawing application shown in FIG. 1, an operation performed by the user via a control like the "cut" control 1006, the "rotate" control 1008, the "paintbrush" control 1009, and the "fill color" control 1010 is related to modification of pixel data of the image, and is an irreversible operation. However, an operation performed by the user via a control like the "copy" control 1005 or the "area select" control 1007 is not related to modification of pixel data, and is a reversible operation.

Further, a preset condition for determining, by the terminal device 100, whether to store content data may be specifically that a quantity of obtained irreversible operations reaches a preset quantity N2 after a previous archive point is generated; or an irreversible operation is obtained after a previous archive point is generated, and time elapsed since the previous archive point is generated exceeds preset time T2; a condition determined by a combination of the quantity and the time may be met, or the like, where N2 is a positive integer, and T2 is a positive number.

In addition, after generating an archive point, the terminal device 100 also associates, with the archive point, an irreversible operation performed after the archive point, and until an obtained operation meets the preset condition, the terminal device 100 generates an archive point and associates a subsequent irreversible operation with the archive point. In addition, when performing an undo operation, if the operation that needs to be undone includes an irreversible operation, the terminal device 100 performs, based on an archive point, the irreversible operation between the archive point and a data version that needs to be rolled back to, to obtain the data version that needs to be rolled back to.

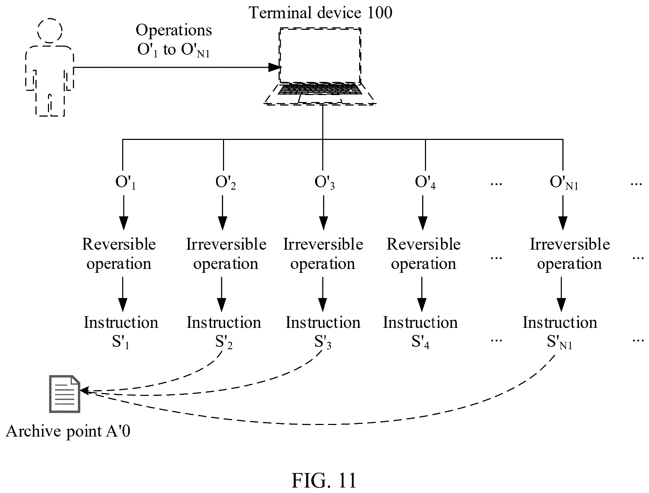

For example, as shown in FIG. 11, when obtaining operations, the terminal device 100 further determines types of the operations. When types of operations are irreversible operation, for example, O'₂, O'₃, and O'_{N1}, instructions corresponding to the irreversible operations are associated with an archive point A'₀. When obtaining that a user needs to roll back to a data version corresponding to O'₄, the terminal device 100 only needs to execute, based on the archive point A'₀, the instructions S'₂ and S'₃ corresponding to the irreversible operations O'₂ and O'₃.

In this way, the terminal device 100 stores content data only when irreversible operations that are related to modification of content data meet the preset condition and generates an archive point. When obtaining N1 consecutive reversible operations, the terminal device 100 is not triggered to store content data. This avoids a case in which content data at a current archive point is consistent with content data at a previous archive point, reduces a quantity of versions of stored content data, and reduces occupied storage space.

Optionally, the terminal device 100 may further classify reversible operations into an associated operation and an unassociated operation based on whether the reversible operations affect another operation. For the associated operation, the associated operation is associated with a subsequently performed irreversible operation, that is, the associated operation and an irreversible operation are used as an operation combination, and the associated operation and the irreversible operation together are also associated with a corresponding archive point.

The unassociated operation means that the operation belongs to a reversible operation and does not affect effect of a subsequent irreversible operation. The associated operation means that the operation belongs to a reversible operation, but modification caused by the operation affects effect of a subsequent irreversible operation, for example, affects a modification range or value of the subsequent operation.

For example, in a drawing application, an associated operation may be an operation that affects a size of a pixel value modified by a subsequent operation. For example, an operation of selecting a color is performed via the control 1013. For example, the user first selects a color. The operation of selecting the color does not affect image data, and is a reversible operation. However, when the user draws via the "paintbrush" control 1009, a drawing track is in the color selected by the user, and the operation of selecting the color is an associated operation.

For another example, an associated operation may be an operation that affects an operation range modified by a subsequent operation. For example, a layer alpha (alpha) lock operation may affect a range modified by a subsequent operation, where alpha refers to an alpha channel in a layer. If a user first modifies transparency of some areas of the layer and then the user performs the alpha lock operation, the subsequent operation takes effect only in an opaque area. For example, if the user fills a color or performs another draw operation, a transparent area of the layer cannot display color filling effect or other drawing effect. The alpha lock operation is an associated operation.

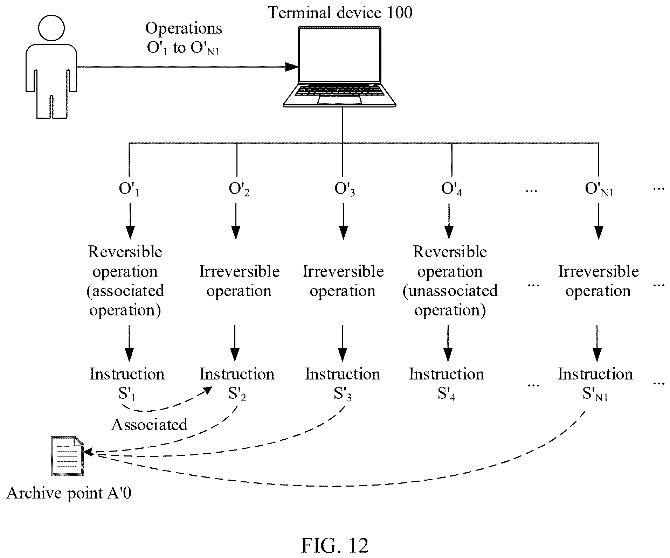

For example, as shown in FIG. 12, the terminal device 100 further determines whether a type of a reversible operation is an associated operation. For example, if determining that O'₁ is an associated operation of a subsequent irreversible operation, the terminal device 100 associates O'₁ with subsequently performed O'₂, and then associates O'₁ and O'₂ together with an archive point A'₀. When obtaining that a user needs to roll back to a data version corresponding to O'₄, the terminal device 100 only needs to execute, based on the archive point A'₀, an instruction S'₁ corresponding to the associated operation O'₁, and instructions S'₂ and S'₃ corresponding to irreversible operations O'₂ and O'₃.

For example, for a drawing application, an irreversible operation is an operation that is related to modification of pixel data of any layer, and a reversible operation is an operation that is not related to modification of pixel data. An associated operation in the reversible operation may be an operation that affects a range or value of pixel data modified by a subsequent irreversible operation, for example, the foregoing layer alpha lock operation. For example, the following Table 1 shows operation types corresponding to different operations in a drawing application.

**Table 1**

| Operation type | | Operation type |
|---|---|---|
| Irreversible operation | | Brush draw |
| | | Filter |
| | | Fill color |
| | | Transform |
| | | Delete layer |
| | | Cut layer |
| Reversible operation | Associated operation | Layer alpha lock |
| | Unassociated operation | Create layer |
| | | Modify blend mode |
| | | Modify opacity |
| | | Area select |

Brush draw may be a draw operation based on the "paintbrush" control 1009 in FIG. 1, or may be a smear operation, an erase operation, or the like. Filter is a Gaussian blur operation, a liquefy operation, or the like. Fill color may be an operation based on the "fill color" control 1010 in FIG. 1. Transform may be an operation for changing a shape of a pattern, or may be an operation based on the "rotate" control 1008, or the like. Image data may alternatively be formed by combining and superimposing a plurality of layers, and delete layer and cut layer are irreversible operations.

Layer alpha lock is an operation of locking transparency of a layer so that a subsequent operation can take effect only in an opaque area. The operation affects the subsequent operation. Therefore, layer alpha lock is the associated operation in the reversible operation. Create layer is to create a blank layer, and does not affect pixel data in an entire image. Modify blend mode is an operation of modifying a composition mode of a plurality of layers, for example, modifying transparency, a color, and light effect of each layer during composition, and does not affect pixel data of each layer. Modify opacity is to adjust transparency of a layer. Area select is an operation of selecting a part or all of images in a layer. After the area select operation is performed, the transform operation, the fill color operation, the filter operation, or the like may be performed on the selected image.

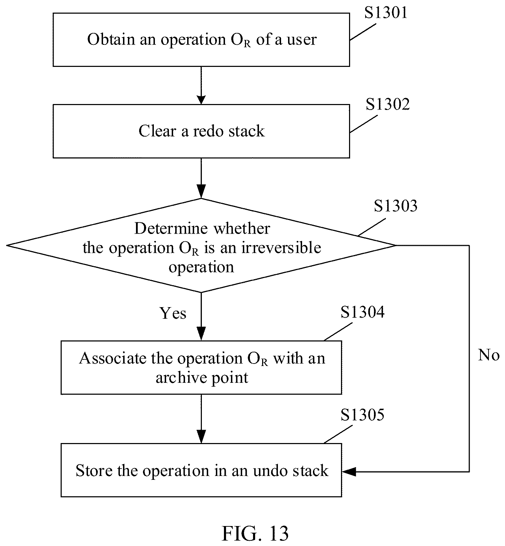

The following describes, by using an example in which operations includes a reversible operation and an irreversible operation, another content editing method provided in an embodiment of this application. The method is also applied to the terminal device 100, and an editing-type application is installed on the terminal device 100. As shown in FIG. 13, the method includes the following steps.

S1301: Obtain an operation O_{R} of a user.

The user may perform a select operation, an edit operation, or the like on content of a current data version by using a function provided by the editing-type application. The terminal device 100 may obtain, via a driver subsystem, the operation O_{R} performed by the user via an input device. The operation O_{R} may be a series of combined operations performed by the user, or may be a single operation performed by the user.

Based on the obtained operation O_{R}, the terminal device 100 further determines information such as an operation type, an operation range, and/or added content data of the operation O_{R}. Then, based on the information of the operation, the operation is encapsulated into a corresponding instruction. For details, refer to the foregoing step S810 and related descriptions thereof.

S1302: Clear a redo stack.

The redo stack stores an operation undone by the user, so that the user can redo the undone operation. After obtaining the new operation O_{R} of the user, the terminal device 100 continues to record the new operation O_{R} based on the current content data. The operation in the redo stack is previously performed based on the current content data. Therefore, the redo stack needs to be cleared to completely invalidate the undone operation. This prevents storing, after the new operation O_{R} is undone, two operations based on the current content data in the redo. When the terminal device 100 sequentially reads and performs the operations in the redo stack, a content data restoration error occurs.

S1303: Determine whether the operation O_{R} is the irreversible operation.

If the operation O_{R} is the irreversible operation, step S1304 is performed. If the operation O_{R} is not the irreversible operation, step S1305 is performed. After obtaining the operation, the terminal device 100 determines whether a type of the operation is the reversible operation or the irreversible operation. Based on different operations, the terminal device 100 performs different storage manners.

The terminal device 100 pre-stores a list of irreversible operations and reversible operations, for example, the list shown in Table 1. The list may be determined based on a file preset by the user, may be pre-loaded during running, or may be input through another port.

S1304: Associate the operation O_{R} with an archive point.

If the type of the O_{R} operation is the irreversible operation, the operation needs to be associated with the latest archive point. In addition, when associating the operation with the archive point, the terminal device 100 further determines whether the irreversible operation associated with the archive point meets a preset condition, and generates, if the irreversible operation associated with the archive point meets the preset condition, a new storage point based on the current content data.

The preset condition includes that a quantity of operations associated with the current latest archive point reaches a preset quantity N2; or time elapsed since the current latest archive point is generated exceeds preset time T2, and the archive point is associated with an operation; or a condition determined by a combination of the quantity and the time may be met.

In addition to associating the operation O_{R} with the archive point, the terminal device 100 further stores an instruction corresponding to the operation O_{R}, that is, may perform step S1305.

Optionally, if the terminal device 100 determines that no archive point is currently generated, the terminal device 100 may further generate an archive point, and associate the operation O_{R} with the generated archive point.

Optionally, if the terminal device 100 determines that the irreversible operation associated with the archive point meets the preset condition, and generates the archive point, the terminal device 100 may further compare the archive point with a previous archive point, and store only a part of content data, in the archive point, updated relative to the previous archive point. For details, refer to related descriptions in the foregoing step S840.

S1305: Store the operation in an undo stack.

If the type of the operation O_{R} is the reversible operation, the operation O_{R} is directly stored in the undo stack. Further, when the reversible operation needs to be undone, because the reversible operation does not modify the content data, the operation O_{R} in the undo stack may be directly read, and the operation O_{R} is directly performed based on the current content data.

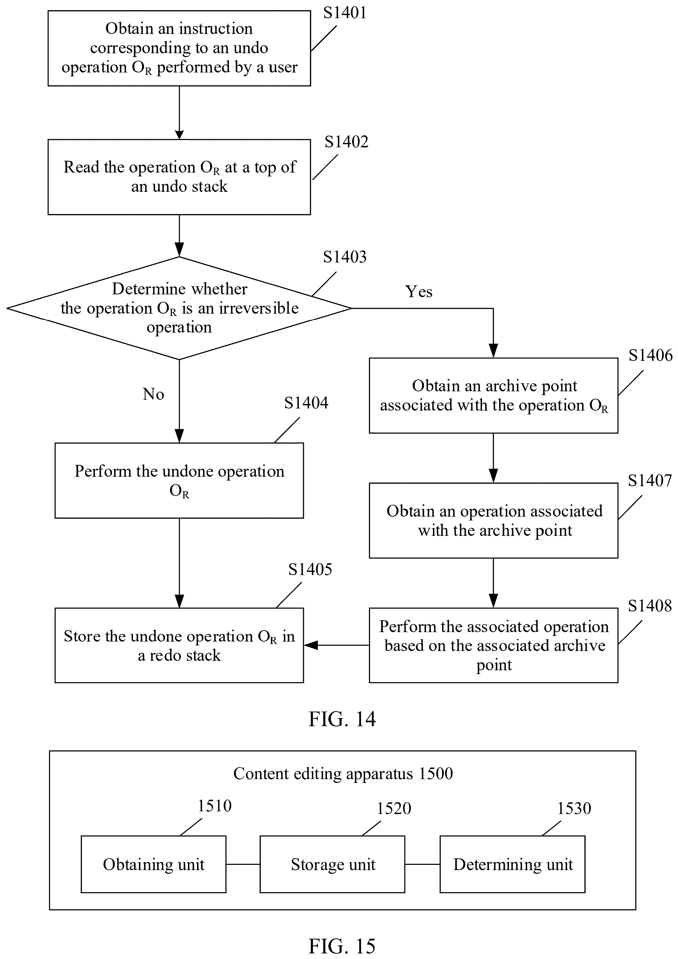

For the irreversible operation, the terminal device 100 also stores the operation O_{R} in the undo stack. Further, when undoing the operation O_{R}, the terminal device 100 also reads the operation O_{R} from the undo stack, and determines, based on the type of the operation O_{R}, an undoing method that needs to be performed. For details, refer to the following description in FIG. 14.

Optionally, if the type of the operation O_{R} is the reversible operation, the terminal device 100 further determines whether the operation O_{R} is an associated operation. If the operation O_{R} is the associated operation, the operation O_{R} is further associated with an irreversible operation subsequently performed by the user. For details, refer to FIG. 12 and related descriptions thereof.

In this way, the terminal device 100 does not need to store content data corresponding to each operation. This saves storage space occupied by the editing-type application. In addition, because a data quantity of instructions corresponding to operations is small, and an amount of content data that needs to be stored is also reduced, the instructions and the content data can be directly stored in a cache. Further, when the redo or undo operation is performed, a corresponding instruction and content data can be read from the cache with a higher read speed. This improves efficiency for performing the redo or undo function.

The following describes, by using an example in which a user undoes an operation, a method procedure performed by the terminal device 100 when the user performs the undo operation O_{R} after the steps shown in FIG. 13. As shown in FIG. 14, the procedure includes the following steps.

S1401: Obtain an instruction corresponding to the undo operation O_{R} performed by the user.

The user can undo a performed operation based on an undo function provided by the editing-type application. Herein, for example, the user performs only the undo operation O_{R}.

S1402: Read the operation O_{R} at a top of an undo stack.

Because the operation O_{R} is a latest performed operation, the instruction corresponding to the operation O_{R} is stored at the top of the undo stack. Therefore, reading is directly performed from the top of the undo stack, and the operation O_{R} is read.

S1403: Determine whether the operation O_{R} is the irreversible operation.

If the operation O_{R} is not the irreversible operation, step S1404 is performed. If the operation O_{R} is the irreversible operation, step S1406 is performed. After obtaining the operation, the terminal device 100 determines whether a type of the operation is the reversible operation or the irreversible operation. Based on different operations, the terminal device 100 performs different undoing manners.

S1404: Perform the undone operation O_{R}.

If the operation O_{R} is the reversible operation, because the reversible operation is not related to modification of content data, effect of the operation can be directly canceled. For example, if the operation O_{R} is an area select operation, performing the undone operation O_{R} directly cancels a select operation on a selected area.

S1405: Store the undone operation O_{R} in a redo stack.

Undone operations are stored in the redo stack, so that the user can redo the undone operations.

S1406: Obtain an archive point associated with the operation O_{R}.

If the operation O_{R} is the irreversible operation, because the irreversible operation is related to modification of content data, the terminal device 100 does not know content data before the operation O_{R} is performed, and cannot directly cancel the operation O_{R}.

The terminal device 100 obtains the archive point associated with the operation O_{R}, namely, a latest archive point that is generated before the operation O_{R} and closest to the operation O_{R}.

S1407: Obtain an operation associated with the archive point.

The terminal device 100 further records the operation associated with the archive point. Therefore, the terminal device 100 also reads, from the operation associated with the archive point in an undo stack, an instruction corresponding to an operation between generation of the archive point and the operation O_{R}.

S1408: Perform the associated operation based on the associated archive point.

The terminal device 100 executes, based on the associated archive point, the instruction corresponding to the associated operation, and can gradually obtain, starting from content data at a target archive point, content data before the operation O_{R} is performed.

In addition, after the content data before the operation O_{R} is performed is obtained, the undone operation O_{R} is also stored in the redo stack, that is, step S1405 is performed.

In this way, the terminal device 100 can execute only some instructions, starting from the latest archive point, and can restore the content data to a corresponding data version. This shortens time consumed by the undo or redo operation, and reduces a workload of a processor.

To resolve the problem of occupying large storage space for storing content of different data versions to implement the undo function, the redo function, the auto-backup function, and another function of the editing-type application, this application provides a content editing apparatus 1500, as shown in FIG. 15, including an obtaining unit 1510, a storage unit 1520, and a determining unit 1530.

The obtaining unit 1510 is configured to: obtain first content, and receive a plurality of operations on the first content. The storage unit 1520 is configured to: store instructions corresponding to the plurality of operations; and store second content obtained after the plurality of operations are performed based on the first content. The obtaining unit 1510 is further configured to receive an undo operation. The determining unit 1530 is configured to obtain, based on the first content, content corresponding to the undo operation.

In some embodiments, the storage unit 1520 is further configured to store the first content and the instructions corresponding to the plurality of operations.

In some other embodiments, the obtaining unit 1510 is further configured to obtain the undo operation for returning to a first operation, where the first operation is one of the plurality of operations. The determining unit 1530 is further configured to: determine, based on the first content and the first operation, a plurality of first previous operations that are stored before the first operation in the plurality of operations; and perform the plurality of first previous operations based on the first content, to obtain the first intermediate content corresponding to the first operation.

In some other embodiments, the determining unit 1530 is further configured to determine, based on the first operation, that content recently stored before the first operation is the first content.

In some other embodiments, the obtaining unit 1510 is further configured to receive a plurality of operations on the second content. The storage unit 1520 is further configured to: store instructions corresponding to the plurality of operations on the second content; and store third content obtained after the plurality of operations on the second content are performed based on the second content.

In some other embodiments, the obtaining unit 1510 is further configured to obtain a redo operation used to restore from the first operation to a second operation, where the first operation occurs between the first content and the second content, and the second operation occurs between the second content and the third content. The obtaining unit 1510 is further configured to obtain first intermediate content corresponding to the first operation. The determining unit 1530 is further configured to: determine a plurality of operations between the first intermediate content and the second operation; and perform, based on the first intermediate content, the plurality of operations between the first intermediate content and the second operation, to obtain second intermediate content corresponding to the second operation.

In some other embodiments, the obtaining unit 1510 is further configured to receive a redo operation, where the redo operation is used to restore from the first intermediate content corresponding to the first operation to second intermediate content corresponding to a second operation, and the second operation is one of the plurality of operations on the second content. The determining unit 1530 is further configured to: determine, based on the second content and the second operation, a plurality of second previous operations that are stored before the second operation in the plurality of operations on the second content; and perform the plurality of second previous operations based on the second content, to obtain the second intermediate content.

In some other embodiments, the obtaining unit 1510 is further configured to receive a redo operation, where the redo operation is used to restore from the first intermediate content corresponding to the first operation to second intermediate content corresponding to a second operation, and the second operation is one of the plurality of operations on the second content; and obtain the first intermediate content corresponding to the first operation. The determining unit 1530 is further configured to: determine a plurality of operations between the first intermediate content and the second operation; and perform, based on the first intermediate content, the plurality of operations between the first intermediate content and the second operation, to obtain the second intermediate content corresponding to the second operation.

In some other embodiments, the obtaining unit 1510 is further configured to obtain an undo operation for returning to a third operation, where the third operation is one of the plurality of operations on the second content. The determining unit 1530 is further configured to: determine, based on the second content and the third operation, a plurality of third previous operations that are stored before the third operation in the plurality of operations on the second content; and perform the plurality of third previous operations based on the second content, to obtain third intermediate content corresponding to the third operation.

In some other embodiments, the determining unit is configured to: determine that the plurality of operations meet a preset condition, and store the second content obtained after the plurality of operations are performed based on the first content, where the preset condition is determined based on at least one of a quantity of operations of the plurality of operations and a time span of the plurality of operations.

In some other embodiments, the preset condition includes at least one of the following: the quantity of operations included in the plurality of operations is greater than a first quantity threshold; and the time span of the plurality of operations is greater than a first time threshold.

In some other embodiments, the operation is an operation for modifying data of content.

In some other embodiments, the operation includes an operation combination, the operation combination includes a first modify operation for modifying the data of the content, and a second modify operation for modifying a modification range or modification data corresponding to the first modify operation, and the second modify operation is performed before the first modify operation.

In some other embodiments, the determining unit 1530 is further configured to compare the first content with the second content, and determine content data that is in the second content and that is different from that in the first content; and the storage unit 1520 is further configured to store the content data that is in the second content and that is different from that in the first content.

In some other embodiments, the storage unit 1520 is further configured to store the second content in a read-only memory or compress the second content and then store the compressed second content in a random access memory.

In some other embodiments, when the first content and the second content are image data, the storage unit 1520 is further configured to store the second content in a cache of a graphics processing unit.

In conclusion, in the content editing apparatus 1500 provided in this application, in addition to the instruction corresponding to the operation, the content data of the current data version is also stored after the preset condition. If storing only the instruction corresponding to the operation, when undoing an operation, an apparatus needs to perform, one by one from an initial data version, all operations before the data version that needs to be restored to. As a result, the undo operation is time-consuming. However, according to the content editing apparatus provided in this application, only some instructions can be executed starting from a latest archive point, so that the content data can be restored to the corresponding data version that needs to be restored to. This shortens time consumed by the undo or redo operation, and reduces a workload of a processor.

All or some of the foregoing embodiments may be implemented by using software, hardware, firmware, or any combination thereof. When software is used for implementation, all or a part of embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or a part of the procedures of the methods in embodiments may be implemented by a computer program instructing related hardware. The program may be stored in a computer-readable storage medium. When the program is executed, the procedures of the methods in embodiments are included. The foregoing storage medium includes any medium that can store program code, like a ROM, a RAM, a magnetic disk, or an optical disc.

## Claims

1. A content editing method, applied to a terminal device, wherein the method comprises:
obtaining first content;
receiving a plurality of operations on the first content;
storing instructions corresponding to the plurality of operations;
storing second content obtained after the plurality of operations are performed based on the first content; and
receiving an undo operation, and obtaining, based on the first content, content corresponding to the undo operation.

2. The method according to claim 1, wherein storing the instructions corresponding to the plurality of operations comprises:
storing the first content and the instructions corresponding to the plurality of operations.

3. The method according to claim 2, wherein receiving the undo operation, and obtaining, based on the first content, the content corresponding to the undo operation comprise:
obtaining the undo operation for returning to first intermediate content corresponding to a first operation, wherein the first operation is one of the plurality of operations;
determining, based on the first content and the first operation, a plurality of first previous operations that are stored before the first operation in the plurality of operations; and
performing the plurality of first previous operations based on the first content, to obtain the first intermediate content corresponding to the first operation.

4. The method according to claim 3, wherein the method further comprises:
determining, based on the first operation, that content recently stored before the first operation is the first content.

5. The method according to claim 3, wherein the method further comprises:
receiving a plurality of operations on the second content;
storing instructions corresponding to the plurality of operations on the second content; and
storing third content obtained after the plurality of operations on the second content are performed based on the second content.

6. The method according to claim 5, wherein the method further comprises:
receiving a redo operation, wherein the redo operation is used to restore from the first intermediate content corresponding to the first operation to second intermediate content corresponding to a second operation, and the second operation is one of the plurality of operations on the second content;
determining, based on the second content and the second operation, a plurality of second previous operations that are stored before the second operation in the plurality of operations on the second content; and
performing the plurality of second previous operations based on the second content, to obtain the second intermediate content.

7. The method according to claim 5, wherein the method further comprises:
receiving a redo operation, wherein the redo operation is used to restore from the first intermediate content corresponding to the first operation to second intermediate content corresponding to a second operation, and the second operation is one of the plurality of operations on the second content;
reading the first intermediate content corresponding to the first operation;
determining a plurality of operations between the first intermediate content and the second operation; and
performing, based on the first intermediate content, the plurality of operations between the first intermediate content and the second operation, to obtain the second intermediate content corresponding to the second operation.

8. The method according to claim 5, wherein the method further comprises:
obtaining an undo operation for returning to a third operation, wherein the third operation is one of the plurality of operations on the second content;
determining, based on the second content and the third operation, a plurality of third previous operations that are stored before the third operation in the plurality of operations on the second content; and
performing the plurality of third previous operations based on the second content, to obtain third intermediate content corresponding to the third operation.

9. The method according to claim 1, wherein storing the second content obtained after the plurality of operations are performed based on the first content comprises:
determining that the plurality of operations meet a preset condition, and storing the second content obtained after the plurality of operations are performed based on the first content, wherein the preset condition is determined based on at least one of a quantity of operations of the plurality of operations and a time span of the plurality of operations.

10. The method according to claim 9, wherein the preset condition comprises at least one of the following:
the quantity of operations comprised in the plurality of operations is greater than a first quantity threshold; and
the time span of the plurality of operations is greater than a first time threshold.

11. The method according to claim 10, wherein the operation is an operation for modifying data of content.

12. The method according to claim 11, wherein the operation comprises an operation combination, the operation combination comprises a first modify operation for modifying the data of the content, and a second modify operation for modifying a modification range or modification data corresponding to the first modify operation, and the second modify operation is performed before the first modify operation.

13. The method according to claim 1, wherein storing the second content obtained after the plurality of operations are performed based on the first content comprises:
comparing the first content with the second content, and determining content data that is in the second content and that is different from that in the first content; and
storing the content data that is in the second content and that is different from that in the first content.

14. The method according to claim 1, wherein storing the second content obtained after the plurality of operations are performed based on the first content comprises at least one of the following:
storing the second content in a read-only memory; and
compressing the second content and then storing the compressed second content in a random access memory.

15. The method according to claim 13, wherein when the first content and the second content are image data, storing the second content obtained after the plurality of operations are performed based on the first content further comprises:
storing the second content in a cache of a graphics processing unit.

16. An electronic device, comprising a processor and a storage, wherein the storage is configured to store instructions, the processor is configured to execute the instructions, and when the processor executes the instructions, the method according to any one of claims 1 to 15 is performed.

17. A computer-readable storage medium, comprising instructions, wherein when the instructions are run on an electronic device, the electronic device is enabled to perform the method according to any one of claims 1 to 15.
